# EUROPEAN PATENT SPECIFICATION

(11) **EP 3 476 261 B1**
(45) Date of publication and mention of the grant of the patent: **20.10.2021**
(21) Application number: 18199663.8
(22) Date of filing: 10.10.2018
(51) Int. Cl.: A47J 37/04, A47J 37/07

(54) **SPIT ROASTER FOR FOODS**
SPIESSRÖSTER FÜR LEBENSMITTEL
RÔTISSOIRE POUR ALIMENTS

(30) Priority: 30.10.2017 ES 201731316
(43) Date of publication of application: 01.05.2019
(73) Proprietor: Sánchez Antón, Jose María, 26007 La Rioja (Logroño) (ES)
(72) Inventor: Sánchez Antón, Jose María, 26007 La Rioja (Logroño) (ES)
(74) Representative: Plasseraud IP

(56) References cited:
- EP-A1- 0 109 028
- US-A- 4 403 595
- US-A- 4 559 869
- US-A1- 2006 027 105
- US-A1- 2013 247 898
- US-A1- 2014 230 665
- US-A1- 2016 058 246

## Description

### Field of the Art

The present invention relates to devices used for roasting foods, proposing a spit roaster having a simplified structural configuration which allows regulating the height at which foods are arranged, and adapting same to the place where hot coals for roasting are found, such as fireplaces, ovens, barbecues, or the like.

### State of the Art

Metal spit roasters or barbecues with a grill are known today. These spit roasters are intended for use with firewood and/or coal combustion for which they include an air inlet on a lower part thereof. In order to regulate the airflow going through the air inlet, and thereby the heat given off by the corresponding hot coals, said air inlet can be regulated to enable more or less air to pass through same.

In the use of conventional spit roasters, however, combustion, most often with flames, occurs when a fat-containing food, meat, or fish, is placed in spit roasters and a few drops of this fat drip onto said flames, causing the roasted food to have an unpleasant taste, being smoked and even getting burnt. This effect is extremely difficult and sometimes even impossible to control by means of regulating the air inlet.

On the other hand, if said spit roasters have a metal griddle for depositing foods to be roasted thereon, the described problem derived from the fat dripping onto the hot coals is solved as the griddle prevents the fat from falling onto said hot coals. However, this is not desirable because it entails roasting the foods on the griddle instead of a grill.

Additionally, conventional spit roasters are usually made up of large and fixed installations which limit their use.

An example of prior art can be found for instance in US 2014/230665 A1 disclosing a barbecue support assembly for supporting an elongate skewer at one or more preselected heights above a barbecue grill.

In view of the described drawbacks or limitations of the solutions existing today, a solution which allows roasting on the grill and offers flexibility both in spit roaster arrangement and in regulating the distance between the hot coals and the foods, is required.

### Object of the Invention

In order to achieve this objective and solve the technical problem described up until now, in addition to provide additional advantages that can be derived hereinbelow, the present invention provides a spit roaster for foods comprising the features of claim 1.

A spit roaster for foods that can be moved and placed according to different spaces for placement thereof is thereby provided. Additionally, the spit roaster for foods provides different roasting heights, which allows roasting foods, be they fish or meat, with different intensities, or simply keeping them warm once roasted.

The spits have an angled, inverted V shape. Therefore, it is preferable for the spits to be supported on the horizontal profiles, limiting the possibility of being moved undesirably while roasting. Likewise, said angled, inverted V shape provides a higher degree of rigidity to the spits to withstand a higher food weight and improves their heat deformation resistance.

According to the foregoing, the spits are configured for foods to be held directly thereon or through a food support in which the foods to be roasted can be arranged. Therefore, the food support can be a grill, a fish pan, or fish-shaped grill, etc.

The two vertical profiles and the horizontal profiles of each of the supports have an angled L shape. It should be an angle having the same dimensions on its sides. The supports are preferably identical to one another. The spit roaster for foods can thereby be manufactured in a simple and cost-effective manner while having a sturdy structure at the same time. Other types of profile can also be used: flat, tubes, etc.

Optionally, the supports comprised in the spit roaster for foods are three in number. An additional support is thereby provided for the spits.

### Description of the Drawings

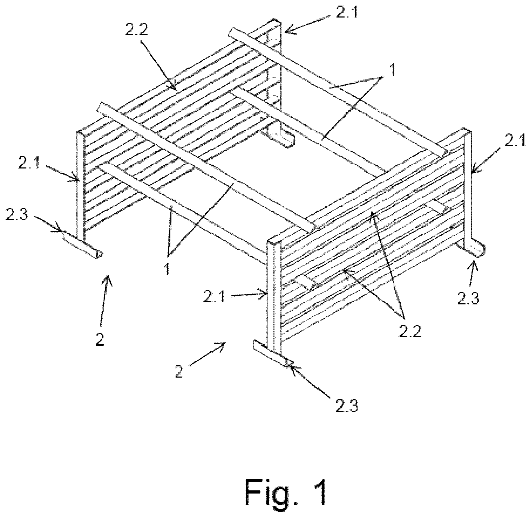

Figure 1 shows a perspective view of a spit roaster for foods object of the invention according to an embodiment.

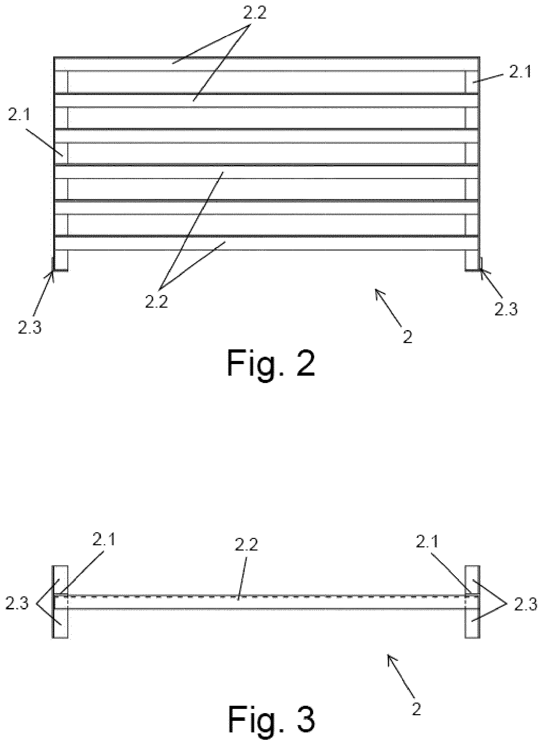

Figure 2 shows an elevational view of a support comprised in the spit roaster for foods object of the invention.
Figure 3 shows a plan view of the support comprised in the spit roaster for foods object of the invention shown in Figure 2.

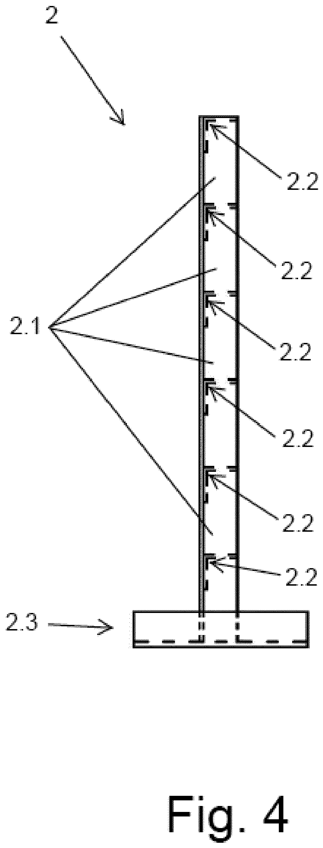

Figure 4 shows a side view of the support comprised in the spit roaster for foods object of the invention shown in Figure 2.
Figure 5 shows a perspective view of the spit roaster for foods object of the invention according to another embodiment.

### Detailed Description of the Invention

The invention relates to a spit roaster for foods comprising spits (1) and supports (2). The spit roaster for foods is easy to use in places such as fireplaces and barbecues and is suitable for roasting meat and fish, with beef steaks, ox steaks, lamb chops, kid goat meat, poultry, rabbits, chickens, hake, red sea bream, sea bass, and sea bream, standing out, for example. Due to its thickness, each of these foods requires different roasting heights in order to achieve optimum roasting.

The spits (1) comprised in the spit roaster for foods can be two or more in number. Said spits (1) are elements that are independent of the supports (2), so the free arrangement thereof according to different needs of roasting heights or the distance of said spits to one another is allowed.

The spits (1) are configured for holding foods to be roasted while roasting, either by the foods being directly arranged on the spits (1) or by the foods being arranged in a food support, such as a grill, or a fish pan, or fish-shaped grill, which can in turn be arranged on said spits (1).

The spits (1) preferably have a cross-section according to an angled, inverted V shape, i.e., a "∧" shape. Therefore, in addition to being structurally reinforced to withstand a higher food weight and to withstand heat, the spits are supported on the supports (2) in a stable manner. Additionally and also preferably, the spits (1) have a longitudinal extension of between 40 cm and 90 cm, such that they provide flexibility when arranging the supports (2) spaced from one another, adapting to the roasting spaces, such as fireplaces, barbecues, etc.

The supports (2) used in the spit roaster for foods can be three in number in order to keep the spits (1) supported on said supports. Deformation of the spits (1) or the need to structurally reinforce said spits (1) when the spits (1) exceed a predetermined length is thereby prevented. When three supports (2) are used in the spit roaster for foods, the spits (1) can even have a longitudinal extension of between 150 cm and 200 cm.

Each of the supports (2) has two vertical profiles (2.1), horizontal profiles (2.2), and two feet (2.3), one for each of the two vertical profiles (2.1). The horizontal profiles (2.2) are arranged joining the two vertical profiles (2.1) to one another. Likewise, the horizontal profiles (2.2) are arranged spaced from one another, determining different roasting heights. Preferably, this spacing between the horizontal profiles (2.2) immediately contiguous to one another is about 5 cm.

The greater the length of the vertical profiles (2.1), the larger the number of horizontal profiles (2.2), and therefore the larger the number of roasting heights, there will be. Therefore, the vertical profiles (2.1) preferably have a longitudinal extension of 20 cm to 40 or 50 cm, and more preferably of 30 cm or 35 cm, whereas the horizontal profiles (2.2) preferably have a longitudinal extension of 20 cm to 80 or 90 cm, and more preferably of 40 cm to 80 or 90 cm, but in any case they can be made having the desired measurements.

These ranges of measurements allow sizing the spit roaster for foods such that it can be moved to a desired place for roasting the selected foods. Additionally, since the supports (2) are independent of one another, the distance of separation between them is also variable, providing flexibility to adapt to the different spaces in which they are placed, as well as to the foods to be roasted at the same time.

Each of the vertical profiles (2.1) preferably has at least two support feet (2.3) to keep the supports (2) according to an arrangement in accordance with a substantially vertical plane. One of the feet (2.3) is placed at each of the lower ends of each of the vertical profiles (2.1) . Said feet (2.3) have a length of between 10 cm and 15 cm, and more preferably 12 cm, and are arranged perpendicular to the longitudinal arrangement of the horizontal profiles (2.2) to provide suitable vertical stability to the supports (2), although the arrangement may be the arrangement deemed the most appropriate.

The vertical profiles (2.1) and the horizontal profiles (2.2) preferably have, in addition to the feet (2.3), a right-angled, L-shaped cross-section, or more preferably a right-angled, L-shaped cross-section measuring 1 × 1 cm, 2 × 2 cm, 3 × 3 cm, etc. This geometry has the advantages of making the invention easy to obtain, in addition to making it easy to assemble and fix the horizontal profiles (2.2) and the feet (2.3) to the vertical profiles (2.1).

Additionally, the vertical profiles (2.1), the horizontal profiles (2.2), and the feet (2.3), as well as the spits (1), are made of carbon steel to withstand exposure to high temperatures during prolonged periods of time.

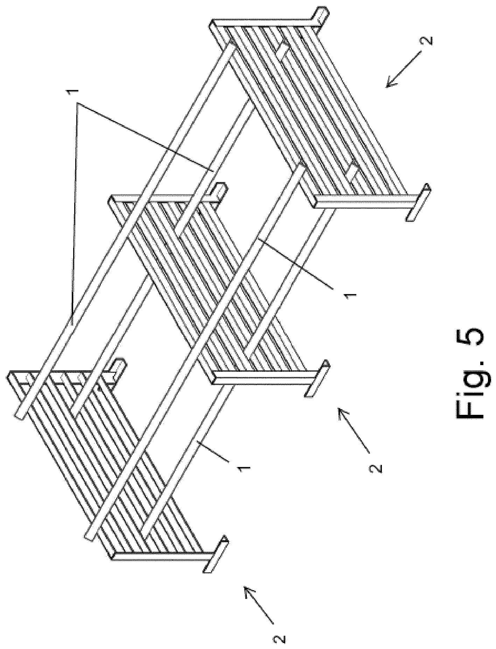

The spit roaster for foods can therefore be placed in the fireplace or barbecue before or after starting the fire. One of the supports (2) can be placed on the left and the other support (2) on the right, at a suitable distance according to the length of the spits (1) and amount or dimensions of the food to be roasted. Additionally, another one of the supports (2) can be placed according to said length of the spits (1), as can be seen in Figure 5.

As described, the spits (1) can be placed, at least in twos, at different levels for roasting the foods according to roasting needs, with the levels being adapted to type of food and/or particular preferences of each consumer.

This spit roaster for foods thereby offers the advantages of not only being height adjustable, but also width and depth adjustable, clearly producing two or more models and being valid for all types of roasted foods from vegetables, thin slices of meat and fish, to slices of meat and fish a few centimeters thick.

This spit roaster for foods solves not only the need of many enthusiasts who appreciate good hot coal-roasted food, but also of an entire line of restaurants in which a spit roaster that can be easily installed at any time is suitable as a result of its versatility.

It must be pointed out that making the supports (2), which are formed by a rigid frame consisting of vertical profiles (2.1) and horizontal profiles (2.2), which rigid frame is inherently stable as it incorporates feet (2.3), allows each support (2) to be completely stable simply by arranging it on the surface of the apparatus or place where it will be installed.

In other words, the rigid frame defining each support (2) is formed by the two vertical profiles (2.1) which are arranged parallel to one another and joined by the horizontal profiles (2.2), wherein each vertical profile (2.1) has foot (2.3) at its lower end, arranged transverse to the vertical profile (2.1) .

The supports (2) can therefore be arranged inside any fireplace, spit roaster, or on a floor, or even on the ground outside, and in all these options the supports will be perfectly positioned and completely stable by simply setting them up. The assembly of the spit roaster for foods object of the invention is therefore extremely simple since in the most common practical embodiment, i.e., the embodiment in which there are two supports (2), setting up the two supports (2) on their feet (2.3) will be sufficient for both supports to be arranged without further action and with full stability to receive the corresponding spits (1), the spit roaster now being assembled and ready to be used as such.

This feature is very important because the assembly simplicity of the supports (2) and the inherent stability thereof allows assembling the spit roaster inside a fireplace in which hot coals are already prepared and a great deal of heat is generated, requiring a quick and simple assembly of the spit roaster.

This very situation would arise when assembling the spit roaster outdoors, over the embers of a campfire, such that the spit roaster can be assembled when the hot coals have already been created, because the assembly speed of the supports (2) and their inherent stability allow performing this assembly, which would be impossible if complementary means for stabilizing the supports (2) which require time for installation had to be installed.

On the other hand, it is also important to take into account that with this solution simply moving the supports (2) farther away from or closer to one another is sufficient to enable adapting the spit roaster to the different inner dimensions of the fireplace or apparatus in which it will be installed, providing great versatility. Furthermore, other than making a simple cut at one of their ends to allow adapting them precisely to the measurement in each case, the spits (1) also allow a certain toying with dimension-wise, even toying with their more or less straight arrangement with respect to the horizontal profiles (2.2).

## Claims

1. A spit roaster for foods comprising:
spits (1);
at least two supports (2) being independent of one another, each of the supports (2) having:
― two vertical profiles (2.1), wherein each vertical profile (2.1) has a foot (2.3) for supporting the support (2);
― horizontal profiles (2.2) which are arranged:
― joining the two vertical profiles (2.1) to one another;
― spaced from one another, determining different roasting heights;
wherein the at least two supports (2) are configured to be freely adjustable such that a distance of separation between them is variable, and
wherein the spits (1) are arranged such that they are freely supported on the horizontal profiles (2.2) of each of the supports (2), the spits (1) being configured for holding foods on their surface.

2. The spit roaster for foods according to claim 1, wherein the spits (1) have an angled, inverted V shape.

3. The spit roaster for foods according to claim 1 or 2, wherein the two vertical profiles (2.1) and the horizontal profiles (2.2) of each of the supports (2) have an angled L shape.

4. The spit roaster for foods according to any one of the preceding claims, wherein the supports (2) are identical to one another.

5. The spit roaster for foods according to any one of the preceding claims, wherein the spits (1) are configured for foods to be held directly on them.

6. The spit roaster for foods according to any one of claims 1 to 4, wherein the spits (1) are configured for holding a food support on which the foods to be roasted can be arranged.

7. The spit roaster for foods according to any one of the preceding claims, wherein the supports (2) are three in number.

8. The spit roaster for foods according to any one of the preceding claims, wherein by means of its feet (2.3), each support (2) is inherently stable in its operative arrangement, such that the assembly of the spit roaster only requires the operative arrangement of the corresponding supports (2) and the subsequent assembly of the respective spits (1) thereon.

9. The spit roaster for foods according to the preceding claim, wherein the spits (1) are only directly supported on the horizontal profiles (2.2) which, along with the supports (2) being inherently stable in their operative arrangement, allows varying the separation between the supports (2) depending on the space available in the apparatus or site of installation.

## Patentansprüche

1. Spießröster für Lebensmittel, aufweisend:
Spieße (1);
mindestens zwei Träger (2), die unabhängig voneinander sind, wobei jeder Träger (2) aufweist:
- zwei Vertikalprofile (2.1), wobei jedes Vertikalprofil (2.1) einen Fuß (2.3) zum Stützen des Trägers (2) aufweist;
- Horizontalprofile (2.2), die angeordnet sind:
- um die zwei Vertikalprofile (2.1) miteinander zu verbinden;
- und voneinander beabstandet sind, um so unterschiedliche Rösthöhen zu bestimmen;
wobei die mindestens zwei Träger (2) frei einstellbar ausgebildet sind, so dass ein Trennungsabstand zwischen ihnen variabel ist, und
wobei die Spieße (1) so angeordnet sind, dass sie frei auf den Horizontalprofilen (2.2) jedes der Träger (2) getragen werden, wobei die Spieße (1) zum Halten von Lebensmitteln auf ihrer Oberfläche ausgebildet sind.

2. Spießröster für Lebensmittel nach Anspruch 1, wobei die Spieße (1) eine winklige, umgekehrte V-Form aufweisen.

3. Spießröster für Lebensmittel nach Anspruch 1 oder 2, wobei die zwei Vertikalprofile (2.1) und die Horizontalprofile (2.2) jedes der Träger (2) eine winklige L-Form aufweisen.

4. Spießröster für Lebensmittel nach einem der vorstehenden Ansprüche, wobei die Träger (2) miteinander identisch sind.

5. Spießröster für Lebensmittel nach einem der vorstehenden Ansprüche, wobei die Spieße (1) so ausgebildet sind, dass Lebensmittel direkt auf ihnen gehalten werden.

6. Spießröster für Lebensmittel nach einem der Ansprüche 1 bis 4, wobei die Spieße (1) zum Halten eines Lebensmittelträgers, auf dem die zu röstenden Lebensmittel angeordnet werden können, ausgebildet sind.

7. Spießröster für Lebensmittel nach einem der vorstehenden Ansprüche, wobei die Anzahl der Träger (2) drei beträgt.

8. Spießröster für Lebensmittel nach einem der vorstehenden Ansprüche, wobei jeder Träger (2) durch seine Füße (2.3) in seiner Anordnung für den Betrieb eigenstabil ist, so dass die Montage des Spießrösters lediglich die Anordnung der jeweiligen Träger (2) für den Betrieb und die darauf folgende Montage der jeweiligen Spieße (1) darauf erfordert.

9. Spießröster für Lebensmittel nach dem vorstehenden Anspruch, wobei die Spieße (1) nur direkt auf den Horizontalprofilen (2.2) getragen werden, was mit der Eigenstabilität der Träger (2) in deren Anordnung für den Betrieb ermöglicht, den Abstand zwischen den Trägern (2) in Abhängigkeit von dem verfügbaren Platz in der Vorrichtung oder am Ort der Installation zu variieren.

## Revendications

1. Rôtissoire pour aliments comprenant :
des broches (1) ;
au moins deux supports (2) qui sont indépendants les uns des autres, chacun des supports (2) ayant :
- deux profils verticaux (2.1), dans laquelle chaque profil vertical (2.1) a un pied (2.3) pour supporter le support (2) ;
- des profils horizontaux (2.2) qui sont agencés :
- joignant les deux profils verticaux (2.1) l'un à l'autre ;
- espacés les uns des autres, déterminant des hauteurs de rôtissage différentes ;
dans laquelle les au moins deux supports (2) sont configurés pour être ajustables librement de telle sorte qu'une distance de séparation entre eux est variable, et
dans laquelle les broches (1) sont agencées de telle sorte qu'elles soient supportées librement sur les profils horizontaux (2.2) de chacun des supports (2), les broches (1) étant configurées pour retenir des aliments sur leur surface.

2. Rôtissoire pour aliments selon la revendication 1, dans laquelle les broches (1) ont une forme de V inversé incliné.

3. Rôtissoire pour aliments selon la revendication 1 ou 2, dans laquelle les deux profils verticaux (2.1) et les profils horizontaux (2.2) de chacun des supports (2) ont une forme de L incliné.

4. Rôtissoire pour aliments selon l'une quelconque des revendications précédentes, dans laquelle les supports (2) sont identiques les uns aux autres.

5. Rôtissoire pour aliments selon l'une quelconque des revendications précédentes, dans laquelle les broches (1) sont configurées pour que des aliments soient retenus directement sur elles.

6. Rôtissoire pour aliments selon l'une quelconque des revendications 1 à 4, dans laquelle les broches (1) sont configurées pour retenir un support d'aliments sur lequel les aliments devant être rôtis peuvent être agencés.

7. Rôtissoire pour aliments selon l'une quelconque des revendications précédentes, dans laquelle les supports (2) sont au nombre de trois.

8. Rôtissoire pour aliments selon l'une quelconque des revendications précédentes, dans laquelle au moyen de ses pieds (2.3), chaque support (2) est naturellement stable dans son agencement fonctionnel, de telle sorte que l'assemblage de la rôtissoire exige seulement l'agencement fonctionnel des supports (2) correspondants et l'assemblage ultérieur des broches (1) respectives sur ceux-ci.

9. Rôtissoire pour aliments selon la revendication précédente, dans laquelle les broches (1) sont seulement supportées directement sur les profils horizontaux (2.2) qui, avec les supports (2) qui sont naturellement stables dans leur agencement fonctionnel, permettent de faire varier la séparation entre les supports (2) en fonction de l'espace disponible dans l'appareil ou le lieu d'installation.
